# NOUVEAU FASCICULE DE BREVET EUROPEEN

(11) **EP 3 077 345 B2**
(45) Date de publication et mention de la décision concernant l'opposition: **17.12.2025**
(45) Mention de la délivrance du brevet: 17.07.2019
(21) Numéro de dépôt: 14806265.6
(22) Date de dépôt: 03.12.2014
(51) Int. Cl.: C04B 28/10, C04B 20/00, C04B 28/02

(54) **SYSTÈME À BASE DE MATÉRIAUX VÉGÉTAUX OU BIO-SOURCÉS**
SYSTEM AUS MATERIALIEN PFLANZLICHEN ODER BIOLOGISCHEN URSPRUNGS
SYSTEM OF PLANT OR BIO-SOURCED MATERIALS

(30) Priorité: 06.12.2013 BE 201300818
(43) Date de publication de la demande: 12.10.2016
(73) Titulaire: S.A. Lhoist Recherche et Développement, 1342 Ottignies-Louvain-la-Neuve (BE)
(72) Inventeur: PETER, Ulrike, B-1050 Ixelles (BE); DAVILLER, Daniel, F-25870 Chatillon-le-Duc (FR)
(74) Mandataire: Gevers Patents
(86) Numéro de dépôt international: PCT/EP2014/076344
(87) Numéro de publication internationale: WO 2015/082513

(56) Documents cités:
- EP-A1- 1 406 849
- EP-A1- 2 263 985
- EP-A2- 1 336 595
- EP-A2- 2 724 996
- EP-B1- 1 406 849
- EP-B2- 1 719 742
- WO-A1-2011/098814
- WO-A1-2014/001712
- BE-A4- 1 006 309
- JP-B2- 3 760 559
- KHAY ISMAIL: "Etude physico-chimique des interfaces chaux/chanvre/argile : Impact sur la rheologie des mortiers et sur les proprietes mecaniques, thermiques et hydriques du materiau composite", THESE, 27 June 2012 (2012-06-27), pages 1 - 144, Retrieved from the Internet <URL:http://aurore.unilim.fr/ori-oai- search/notice/view/unilim-ori-59687?lightbox=true>
- "Fiche technique: ARGICEM Addition pouzzolanique", ARGECO DEVELOPPEMENT, 1 October 2012 (2012-10-01), pages 1 - 2, XP055170459, Retrieved from the Internet <URL:http://www.argeco.fr/pdf/FT argicem.pdf?PHPSESSID=91d77b29c992d1215ff7ad30884297c0> [retrieved on 20150218]
- OATES J A H ED - OATES JOSEPH A H: "LIME AND LIMESTONE: CHEMISTRY AND TECHNOLOGY, PRODUCTION AND USES, PART 4: PRODUCTION OF SLAKED LIME; PART 5: USES AND SPECIFICATIONS OF LIME PRODUCTS", 1 January 1998, LIME AND LIMESTONE: CHEMISTRY AND TECHNOLOGY, PRODUCTION AND USES, WILEY-VCH, WEINHEIM, PAGE(S) 218 - 223,258,259,267, ISBN: 978-3-527-29527-2, XP002735206

## Description

La présente invention se rapporte à un système à base de matériaux végétaux ou bio-sourcés choisi parmi les enduits, les mortiers et les bétons de matériaux bio-sourcés comprenant un matériau végétal ou bio-sourcé choisi dans le groupe constitué du bois et du chanvre, et une composition de liant comprenant un premier composant minéral conventionnel et un deuxième composant.

Par le terme « mortier », on entend au sens de la présente invention un mélange d'un ou plusieurs liants minéraux comme la chaux, un ciment ou analogue, éventuellement associé(s) à un ou plusieurs liants organiques, et d'agrégat(s). Dans le cas d'un mortier «léger» à agrégats végétaux ou bio-sourcés, les agrégats sont du type chanvre, bois ou analogues. Un tel mortier est utilisé en construction pour lier et/ou pour recouvrir les éléments de construction et peut également contenir des fillers, des additifs et/ou des adjuvants.

Par le terme « enduit », on entend une composition de mortier destinée à être appliquée en couche en une ou plusieurs passes. Un enduit est donc un mortier à application de surface à l'extérieur (« render » en anglais) ou à l'intérieur (« plaster » en anglais).

Par les termes « béton léger» au sens de la présente invention, on entend principalement un mortier léger, utilisé en application volumique (blocs, banchage...).

Les mortiers, bétons et enduits légers à agrégats végétaux ou bio-sourcés sont déjà bien connus de l'homme de métier. A titre d'exemple, on peut citer le document EP1406849 qui décrit des compositions pour le secteur technique des bétons et mortiers dits de chanvre c'est-à-dire contenant de l'ana de chanvre ou chènevotte défibrée ou non et/ou d'autres composants du chanvre, comme les fibres, fibrilles, poussières, poudres de chanvre.

Par le terme chanvre au sens de la présente invention, on entend que le matériau bio-sourcé comprend au moins un composant issu du chanvre, et/ou du lin, et/ou du miscanthus, et/ou du tournesol et/ou de la paille de céréale, comme la cosse d'avoine ou la cosse de riz, et/ou de manière générale de toute matière hydrophile comparable, y compris éventuellement synthétique.

Les liants utilisés dans ce genre de compositions sont couramment le plâtre, la chaux aérienne, la chaux formulée ou la chaux hydraulique, les ciments et autres liants hydrauliques et pouzzolaniques comme du méta-kaolin, des laitiers de haut-fourneau ou des cendres volantes.

Ces produits de construction à base de chanvre ou de bois présentent un avantage majeur en termes d'isolation thermique et acoustique ainsi qu'en termes de résistance mécanique notamment en matière de résistance à la compression et de retour en élasticité, ce qui en fait de très bons produits adaptés aux normes sismiques.

Toutefois, ces compositions de bétons et mortiers posent un problème très sérieux du fait du caractère fortement hydrophile de l'agrégat végétal ou bio-sourcé. En effet, celui-ci étant capable d'absorber une très grande quantité d'eau, jusqu'à environ 400 % de son poids (d'eau ou de liquide à base aqueuse), il a souvent tendance à absorber l'eau contenue dans le mortier ou béton et nécessaire à la solidification de ces systèmes, notamment lorsque le liant utilisé est à prise hydraulique. Ces bétons et mortiers nécessitent dès lors souvent l'utilisation de quantité d'eau plus importante et/ou présentent des caractéristiques de séchage, de prise, et de propriétés mécaniques aléatoires.

Selon le document EP 1406849, les inconvénients de ces bétons et mortiers de chanvre ont été partiellement solutionnés par l'utilisation d'un liant particulier constitué, en totalité ou en partie, de chaux aérienne éventuellement en combinaisons diverses de types et de formes de chaux et comportant au moins un adjuvant de formation de pores et capillaires très fins et au moins un adjuvant d'hydrophobation matricielle.

Cependant, les mortiers/bétons de chanvre ainsi obtenus présentent toujours de graves défauts, tels que le défaut de séchage et autres défauts analogues (défaut de prise, farinage,..), qu'une grande partie de l'industrie considérée, malgré tous ses efforts, n'est pas parvenue à surmonter et s'est donc vue forcée de s'en accommoder.

Le document EP2263985 divulgue un matériau composite caractérisé en ce qu'il comprend un liant comprenant 45 à 70 % en masse de liant d'une chaux naturelle et 30 à 50 % en masse de liant de métakaolin, et des granulats de chènevotte de chanvre présents à hauteur de 15 à 30 % en masse sèche de liant, avec un rapport eau/liant compris entre 0.5 et 1.5.

Le document WO2014/001712 divulgue un matériau de construction comprenant : de 10% à 60% d'un liant hydraulique et/ou liant aérien, de 16% à 50% d'un granulat végétal (chanvre, copeaux de bois), de 0.05% à 5% d'un agent rétenteur d'eau et de 10% à 50% d'eau. Le liant est choisi comme étant de la chaux hydraulique, un ciment Portland artificiel, un ciment naturel prompt et/ou de la chaux aérienne.Par ailleurs, les bétons à base d'agrégats végétaux ou bio-sourcés souffrent d'une instabilité des performances applicatives, liée aux interactions indésirables du liant minéral avec les extractibles et produits de dégradation de l'agrégat organique, ayant notamment pour conséquence de retarder, voire d'inhiber, la prise du liant minéral conventionnellement utilisé.

Ces interactions varient avec la composition chimique et les propriétés physico-chimiques de l'agrégat végétal, qui dépendent de la variété, la provenance, les conditions climatiques, la culture et la transformation de la plante, donc de facteurs variables et imprévisibles.

La présente invention vise à résoudre les problèmes précités, en particulier à inhiber les interactions indésirables des liants minéraux, conventionnellement utilisés dans les mortiers, bétons et enduits légers à agrégats végétaux ou bio-sourcés, avec les extractibles et produits de dégradation de l'agrégat organique.

Pour résoudre ce problème, il est prévu suivant l'invention un système à base de matériaux végétaux ou bio-sourcés tel qu'indiqué au début qui est caractérisé en ce que ladite composition de liant présente une surface spécifique calculée selon la méthode BET supérieure à 10 m²/g, de préférence supérieure à 12 m²/g, en particulier supérieure à 14 m²/g et ledit deuxième composant présente une surface spécifique calculée selon la méthode BET supérieure à 22 m²/g, de préférence supérieure à 25 m²/g et est choisi dans le groupe constitué de la chaux éteinte pulvérulente, des argiles colloïdales, choisies dans le groupe constitué des kaolinites, de la bentonite, des wollastonites et de leurs mélanges et ledit premier composant minéral conventionnel est un composant liant choisi dans le groupe constitué des ciments, de la chaux éteinte ou aérienne standard, de la chaux hydraulique naturelle ou artificielle, des argiles, des liants à maçonner, des liants à prise pouzzolanique et hydraulique, du plâtre et de leurs mélanges et au moins un parmi ledit premier composant minéral conventionnel et ledit deuxième composant est à base de chaux éteinte pulvérulente.

La surface spécifique selon la présente invention est mesurée par manométrie d'adsorption d'azote et calculée selon la méthode BET, après dégazage sous vide à 190°C pendant au moins 2 heures.

Il est important de ne pas confondre surface spécifique BET, mesurée par adsorption ou désorption d'azote après dégazage, et surface spécifique Blaine, mesurée par perméabilité à l'air. En effet, la méthode BET permet de déterminer la totalité de la surface spécifique d'un composé, en tenant notamment compte de sa porosité, et n'est pas directement dépendante de la taille des particules constitutives, tandis que la méthode Blaine permet de déterminer uniquement la surface externe des particules de ce composé et dépend directement de la taille de celles-ci. (Allan T., Particle Size Measurement, Vol. 2, Surface area and pore size determination, cinquième édition, 1997, page 11, page 39).

L'augmentation de la surface spécifique de la composition de liant du système à base de matériaux végétaux ou bio-sourcés selon la présente invention présente un avantage majeur résidant dans son interaction avec les molécules organiques, provenant aussi bien des additifs typiquement utilisés dans les liants et mortiers que des extractibles et produits de dégradation des bois et fibres végétales. S'il est souhaité que les additifs organiques puissent garder leur action sur le système mortier, enduit ou béton à base d'agrégats végétaux ou bio-sourcés selon la présente invention, les produits d'extraction ou de décomposition du matériau végétal ou bio-sourcé sont quant à eux plutôt néfastes pour ledit système. Il est donc avantageux de pouvoir inhiber les effets de ces derniers.

La chaux éteinte est constituée d'un ensemble de particules solides, principalement de di-hydroxyde de calcium de formule Ca(OH)₂, et est le résultat industriel de l'extinction d'une chaux vive avec de l'eau, réaction également appelée hydratation. Ce produit est également connu sous le nom de chaux hydratée ou chaux aérienne et présente typiquement des surfaces spécifiques BET inférieures à 20 m²/g (J.A.H. Oates, Lime and Limestone-Chemistry and Technology, Production and Uses, 1998, p. 220).

Cette chaux éteinte ou hydratée (« slaked lime » or « hydrated lime » en anglais) ou aérienne (« air lime » en anglais) ou hydroxyde de calcium peut évidemment contenir des impuretés, à savoir des phases dérivées de SiO₂, Al₂O₃, Fe₂O₃, MnO, P₂O₅, K₂O et/ou SO₃, représentant globalement quelques dizaines de grammes par kilogramme. Néanmoins, la somme de ces impuretés, exprimées sous la forme des oxydes précités, ne dépasse pas 5 % en masse, de préférence 3 %, de préférence 2 % ou même 1 % de la masse de la chaux éteinte selon l'invention. En particulier, la chaux éteinte contient avantageusement moins de 1,5 % en masse de Fe₂O₃, de préférence moins de 1 % et de préférence moins de 0,5%.

Cette chaux éteinte peut encore contenir de l'oxyde ou de l'hydroxyde de magnésium. Suivant les teneurs en ces composés, on parlera de chaux magnésienne, dolomitique ou de dolomie, partiellement ou totalement éteinte.

Cette chaux éteinte peut aussi contenir de l'oxyde de calcium qui n'aurait pas été hydraté au cours de l'extinction, tout comme elle peut contenir du carbonate de calcium CaCO₃ ou de magnésium MgCO₃. Ces carbonates peuvent provenir soit du calcaire initial (ou de la dolomie crue) dont est dérivée la chaux éteinte selon l'invention (incuits), soit d'une réaction de carbonatation partielle de la chaux éteinte au contact de l'air. La teneur en oxyde de calcium dans la chaux éteinte dans le cadre de la présente invention est généralement inférieure à 3 % en masse, de préférence inférieure à 2 % et de manière avantageuse inférieure à 1 %. Celle en carbonates est inférieure à 20 % en masse, en particulier inférieure à 10% en masse, de préférence inférieure à 6 % et de manière avantageuse inférieure à 4 %, de manière encore plus avantageuse inférieure à 3%.

Selon la présente invention, la sélection d'un deuxième composant à haute surface spécifique, c'est-à-dire supérieure ou égale à 22 m²/g, de préférence supérieure à 25 m²/g, comme deuxième composant de ladite composition de liant du système selon l'invention en ayant recours à une chaux éteinte pulvérulente à haute surface spécifique ou en ajoutant un composant de type argile colloïdale, choisies dans le groupe constitué des kaolinites, de la bentonite, des wollastonites et de leurs mélanges, a permis, de manière surprenante, de réduire l'impact néfaste des produits d'extraction ou de décomposition du matériau végétal ou bio-sourcé sans altérer le fonctionnement global du mortier, béton ou enduit léger résultant, en particulier en préservant l'action des additifs organiques susdits dans ledit système. Ce phénomène est d'autant moins prévisible que si ces molécules organiques sont adsorbées sur le deuxième composant, rien ne laisse présager que l'action des additifs organiques et/ou l'action du deuxième composant seront préservées.

La présence du deuxième composant à haute surface spécifique dans la composition de liant du système à base de matériaux végétaux ou bio-sourcés suivant l'invention permet, lors de l'utilisation dans un mortier, enduit ou béton à base d'agrégats végétaux ou bio-sourcés de réduire, voire de supprimer l'inhibition de la prise hydraulique du premier composant minéral (en particulier un premier liant minéral conventionnel), prise qui est dès lors moins retardée. De plus, la prise aérienne du mortier, enduit ou béton à base d'agrégats végétaux ou bio-sourcés est favorisée. Ceci conduit à un mortier, enduit ou béton plus résistant. En outre, une diminution de la quantité de liant (et par conséquent du coût du système) peut alors être envisagée à iso-performances. De même, le phénomène de farinage est diminué voir annihilé.

Avantageusement, ledit deuxième composant du système à base de matériaux végétaux ou bio-sourcés présente une surface spécifique calculée selon la méthode BET supérieure à 27 m²/g de préférence supérieure à 30 m²/g, de manière préférentielle, supérieure à 32 m²/g et en particulier supérieure à 35 m²/g.

De préférence, lesdits ciments sont choisis dans le groupe des ciments courants, en particulier normalisés, par exemple gris ou blanc, des ciments réfractaires, alumineux fondus, prompts, des ciments portland, des laitiers de hauts-fourneaux, des cendres volantes et de leurs mélanges.

De préférence, ledit deuxième composant est présent en une quantité supérieure à 5% en poids, avantageusement supérieure à 10% en poids, préférentiellement supérieure à 20 % en poids, en particulier égale ou supérieure à 25% en poids, de préférence égale ou supérieure à 30 % en poids, avantageusement égale ou supérieure à 40% en poids et égale ou inférieure à 80 % en poids, en particulier égale ou inférieure à 60 % en poids, par rapport au poids total de ladite composition de liant du système à base de matériaux végétaux ou bio-sourcés.

De manière plus particulière, ledit deuxième composant présente des particules présentant un d₃ supérieur à 0,1 µm, en particulier supérieur à 0,5 µm et un d₉₈ inférieur ou égal à 200 µm, en particulier inférieur ou égal à 150 µm, mesurés par granulométrie laser dans du méthanol.

La notation d_{X} représente un diamètre, exprimé en µm, par rapport auquel X % des particules ou grains mesurées sont plus petites.

Dans une forme de réalisation particulière selon la présente invention, ledit deuxième composant présente des particules présentant un d₉₈ inférieur ou égal à 90 µm, tout particulièrement inférieur ou égal à 63 µm.

Dans une forme de réalisation préférentielle selon la présente invention, ledit deuxième composant présente un volume poreux total calculé selon la méthode BJH de désorption d'azote supérieur ou égal à 0,07 cm³/g, de préférence supérieur ou égal à 0,08 cm³/g, de manière préférentielle supérieur ou égal à 0,1 cm³/g.

Dans une forme de réalisation particulière selon la présente invention, ledit deuxième composant présente un volume poreux total calculé selon la méthode BJH de désorption d'azote supérieur ou égal à 0,12 cm³/g, de préférence supérieur ou égal à 0,15 cm³/g et de manière particulière supérieur à 0,18 cm³/g.

Par « volume poreux total» au sens de la présente invention, on entend le volume total des pores dont la taille est comprise entre 17 et 1000 Å (1,7 et 100 nm), mesuré par manométrie d'adsorption d'azote et calculé selon la méthode BJH, après dégazage sous vide à 190°C pendant au moins 2 heures. En particulier, ledit deuxième composant est à base de chaux éteinte pulvérulente et présente une densité en vrac mesurée selon la norme EN 459-2 allant de 250 à 500 kg/m³.

De manière préférentielle, le système à base de matériaux végétaux ou bio-sourcés selon la présente invention comprend en outre un entraîneur d'air tel qu'un surfactant ou tensioactif, en particulier choisi dans le groupe des sulfates et sulfonates d'alkyle, des alcools gras éthoxylés, des copolymères à blocs et de leurs mélanges.

Dans une variante selon l'invention, le système à base de matériaux végétaux ou bio-sourcés peut comprendre en outre un ou plusieurs agent de rétention d'eau, par exemple des éthers cellulosiques ou des gommes de guar, leurs dérivés et leurs mélanges.

Dans encore une autre variante selon la présente invention, le système à base de matériaux végétaux ou bio-sourcés comprend en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates et des mélamines formaldéhydes, des colloïdes minéraux, en particulier la silice et les argiles, et leurs mélanges.

Avantageusement, le système à base de matériaux végétaux ou bio-sourcés selon l'invention comprend également un agent hydrophobant choisi dans le groupe des sels d'acides gras comme les stéarates et les oléates, des huiles végétales et minérales, des silanes, des siloxanes et de leurs mélanges.

Dans une variante particulière, le système à base de matériaux végétaux ou bio-sourcés selon la présente invention comprend en outre un liant organique choisi dans le groupe des latex industriels comme par exemple des latex à base de copolymères d'acétate de polyvinyle/éthylène, d'acétate de polyvinyle/versatate, de styrol / butadiène.

Dans une forme de réalisation préférentielle selon la présente invention, le système à base de matériaux végétaux ou bio-sourcés tel que mentionné ci-dessus est sous forme sèche, prêt à gâcher avec de l'eau.

Dans une variante selon la présente invention, le système à base de matériaux végétaux ou bio-sourcés comprend en outre de l'eau et est ainsi sous forme prêt à l'emploi.

Il est entendu que le système selon l'invention peut être prévu soit sous forme d'une composition pré-formulée soit sous forme de deux composants à mélanger sur site selon un protocole prédéterminé.

D'autres formes de réalisation du système à base de matériaux végétaux ou bio-sourcés pour mortiers, bétons et enduits légers à agrégats végétaux ou bio-sourcés, plus particulièrement pour béton de chanvre suivant l'invention sont indiquées dans les revendications annexées.

L'invention se rapporte également à une utilisation du système à base de matériaux végétaux ou bio-sourcés selon la présente invention, dans un mortier contenant des agrégats végétaux ou bio-sourcés comme le bois ou le chanvre.

L'invention se rapporte également à une utilisation du système à base de matériaux végétaux ou bio-sourcés selon la présente invention dans un enduit léger contenant des agrégats végétaux ou bio-sourcés comme le bois ou le chanvre.

La présente invention se rapporte également à une utilisation du système à base de matériaux végétaux ou bio-sourcés selon l'invention dans un béton contenant des agrégats végétaux ou bio-sourcés comme le bois ou le chanvre.

Avantageusement, lesdits agrégats végétaux ou bio-sourcés ont une forme de pailles de longueur de 5 à 50 mm et de largeur inférieure à 10 mm.

D'autres formes d'utilisation du système à base de matériaux végétaux ou bio-sourcés selon l'invention sont mentionnées dans les revendications annexées.

D'autres caractéristiques, détails et avantages de l'invention ressortiront de la description donnée ci-après, à titre non limitatif et en faisant référence aux exemples.

### Exemples.-

### Exemple 1.-

Une composition de liant pour béton de chanvre est composée (en masse) de 42 % de diverses chaux éteintes (chaux aérienne standard STD, chaux éteinte de plus grande surface spécifique HS ou chaux éteinte de plus faible surface spécifique BS) comme deuxième composant selon le tableau 1 ci-dessous, 42% de ciment Portland CEM I 52,5 comme premier composant minéral, et de 16% de filler calcaire <300 µm. Des additifs organiques habituellement utilisés dans les mortiers (entraineurs d'air, rétenteurs d'eau, additifs rhéologiques, hydrophobants) sont en outre ajoutés dans une proportion en poids de 0 à 2% par rapport au poids total de ladite composition de liant. Notamment, la composition de liant comprend 0,2 % en poids d'entraineur d'air. La granulométrie des chaux éteintes est mesurée dans du méthanol à l'aide d'un granulomètre laser.

**Tableau 1.-**

| Deuxième composant | Surface BET (m²/g) du deuxième composant | Surface BET (m²/g) de la composition de liant | d₃ (µm) | d₁₀ (µm) | d₂₅ (µm) | d₅₀ (µm) | d₇₅ (µm) | d₉₀ (µm) | d₉₇ (µm) |
|---|---|---|---|---|---|---|---|---|---|
| Chaux BS3 | 6,7 | 3,6 | 0,8 | 1,4 | 3,3 | 11,7 | 38,3 | 75,5 | 132,0 |
| Chaux STD4 | 14,6 | 6,9 | 0,7 | 1,2 | 2,0 | 3,6 | 6,2 | 9,8 | 34,9 |
| Chaux HS2 | 35,8 | 15,8 | 0,8 | 1,2 | 2,0 | 4,2 | 10,0 | 27,3 | 50,7 |
| Chaux HS3 | 31,7 | 14,1 | 0,8 | 1,3 | 2,1 | 3,8 | 6,7 | 12,8 | 36,2 |

Un béton de chanvre est alors préparé en utilisant 9,6 kg de ces liants formulés, avec 4,15 kg de chènevotte de chanvre 1, de qualité commerciale. Le taux d'eau (Eau/Solide, E/S) est ajusté afin d'obtenir une même consistance du béton frais. Des échantillons en forme cylindrique (h=22 cm, d=11cm) sont alors préparés dans des éprouvettes. Plus précisément, des couches de béton, compressées chacune à une pression d'environ 0,006 MPa, sont successivement empilées les unes sur les autres dans lesdites éprouvettes. Après leur préparation, les éprouvettes sont stockées en chambre climatique à 20 °C et 65% d'humidité.

Des essais de compression uniaxiale entre 2 plateaux parallèles (déplacement de 5mm/min) ont été réalisés sur ces échantillons après 14 et 28 jours de stockage, suivis par 3 jours de séchage à 40 °C. Les résistances à la compression (Rc) sont mentionnées au tableau 2 (moyennes sur 6 mesures).

**Tableau 2.-**

| Béton à base de | E/S (%) | Rc 14 j (MPa) | Rc 28 j (MPa) |
|---|---|---|---|
| Chaux BS3 | 76 | 0,03 ± 0,01 | 0,03 ± 0,01 |
| Chaux STD4 | 79 | 0,10 ± 0,01 | 0,20 ± 0,01 |
| Chaux HS2* | 81 | 0,28 ± 0,01 | 0,27 ± 0,01 |
| Chaux HS3* | 84 | 0,28 ± 0,01 | 0,29 ± 0,01 |
| * selon l'invention | | | |

Comme on peut le constater, les bétons à base des chaux HS2 et HS3 présentent une résistance mécanique augmentée, due à la surface spécifique élevée de la chaux utilisée comme deuxième composant dans la composition de liant du système selon l'invention, ainsi qu'un développement de la résistance à la compression plus rapide.

### Exemple 2.-

Une composition de liant pour béton de chanvre est composée (en masse) de 42 % de diverses chaux éteintes (chaux aérienne standard STD, chaux éteinte de plus grande surface spécifique HS ou chaux éteinte de plus faible surface spécifique BS) comme deuxième composant selon le tableau 3 ci-dessous, 42% de ciment Portland CEM I 52,5 comme premier composant minéral, et de 16% de filler calcaire <300 µm. Des additifs organiques habituellement utilisés dans les mortiers (entraîneurs d'air, rétenteurs d'eau, additifs rhéologiques, hydrophobants) sont en outre ajoutés dans une proportion en poids de 0 à 2% par rapport au poids total de ladite composition de liant. La granulométrie des chaux éteintes est mesurée à l'aide d'un granulomètre laser dans du méthanol.

**Tableau 3.-**

| Deuxième composant | Surface BET (m²/g) du deuxième composant | d₃ (µm) | d₁₀ (µm) | d₂₅ (µm) | d₅₀ (µm) | d₇₅ (µm) | d₉₀ (µm) | d₉₇ (µm) |
|---|---|---|---|---|---|---|---|---|
| Chaux BS4 | 6,9 | 1,1 | 3,1 | 13,5 | 54,2 | 102,8 | 156,7 | 225,3 |
| Chaux STD5 | 13,5 | 0,7 | 1,3 | 2,5 | 5,0 | 8,3 | 12,9 | 32,2 |
| Chaux HS4 | 39,6 | 0,9 | 1,3 | 2,2 | 4,3 | 9,7 | 27,5 | 51,3 |

Un béton de chanvre est préparé en utilisant, en proportions massiques, 9,3 kg des liants formulés, avec 4,15 kg de chènevotte de chanvre 2, de qualité commerciale, cette deuxième chènevotte de chanvre étant connue pour induire un farinage du béton standard sur chantier. Des échantillons en forme cylindrique du béton ainsi formé sont préparés comme à l'exemple 1.

Des essais de compression (déplacement de 5mm/min) ont été réalisés sur ces échantillons après 28 jours de stockage, suivis par 3 jours de séchage à 40 °C. Les résistances à la compression (Rc) sont mentionnées au tableau 4.

**Tableau 4.-**

| Béton à base de | E/S (%) | Rc 28 j (MPa) |
|---|---|---|
| Chaux BS4 | 77 | 0,01 ± 0,01 |
| Chaux STD5 | 77 | 0,01 ± 0,01 |
| Chaux HS4* | 81 | 0,21 ± 0,01 |
| * selon l'invention | | |

Dans les bétons à base de chaux standard (chaux STD5) et de chaux à basse surface spécifique (BS4), tous les échantillons préparés n'ont pas pu être testés car certains se sont brisés lors de leur démoulage.

Dans les éprouvettes à base de liant avec la chaux standard et la chaux à basse surface spécifique, on observe également une couche d'apparence jaune/brunâtre (« croûte ») typiquement observée dans des échantillons de béton de chanvre fariné.

De plus, dans ces deux bétons, des résistances à la compression très faibles ont été constatées.

Seul le liant à base de chaux à haute surface spécifique (HS4) permet d'atteindre un niveau significatif de résistance mécanique.

### Exemple 3.-

Une composition de liant pour béton de chanvre est composée (en masse) de 42% de minéraux à haute surface spécifique (chaux standard STD, chaux à haute surface spécifique HS, bentonite, silice pyrogénée « Aerosil 200 ») ou d'un mélange de ceux-ci comme deuxième composant selon le tableau 5 ci-dessous, 42% de ciment Portland CEM I 52,5 comme premier composant minéral, et de 16% de filler calcaire <300 µm. Des additifs organiques habituellement utilisés dans les mortiers (entraîneurs d'air, rétenteurs d'eau, additifs rhéologiques, hydrophobants) sont en outre ajoutés dans une proportion en poids de 0 à 2% par rapport au poids de ladite composition de liant.

**Tableau 5.-**

| Deuxième composant | Chaux STD6 (%) | Chaux HS5 (%) | Bentonite ( %) | Aerosil 200(%) | Surface BET du deuxième composant (m²/g) | Vol. poreux BJH du deuxième composant (cm³/g) | Surface BET de la composition de liant (m²/g) | Vol. poreux BJH de la composition de liant (cm³/g) |
|---|---|---|---|---|---|---|---|---|
| Chaux STD6 | 100 | | | | 12,6 | 0,06 | 5,6 | 0,03 |
| Chaux HS5 | | 100 | | | 43,8 | 0,20 | 18,1 | 0,09 |
| Composant A | 50 | | 50 | | 44,2 | 0,08 | 12,2 | 0,04 |
| Composant B | 84 | | | 16 | 44,0 | 0,16 | 15,5 | 0,06 |

Un béton de chanvre est alors préparé en utilisant, en proportions massiques, 6,7 kg de ces liants formulés, avec 3,0 kg de chènevotte de chanvre 2, connue pour induire un farinage du béton standard sur chantier (voir exemple 2). Des échantillons en forme cylindrique du béton ainsi formé sont préparés comme aux exemples 1 et 2.

Des essais de compression (déplacement de 5mm/min) ont été réalisés sur ces échantillons après 14 et 28 jours de stockage, suivis ici par 7 jours de séchage à 40 °C. Les résistances à la compression (Rc) sont mentionnées au tableau 6.

**Tableau 6.-**

| Béton à base de | E/S | R_{C} | R_{C} |
|---|---|---|---|
| | (%) | 14 j (MPa) | 28 j (MPa) |
| Chaux STD6 | 73,0 | 0,01 ± 0,01 | 0,01 ± 0,01 |
| Chaux HS5* | 76,1 | 0,31 ± 0,05 | 0,30 ± 0,02 |
| Composant A* | 72,0 | 0,06 ± 0,01 | 0,09 ± 0,01 |
| Composant B | 70,0 | 0,18 ± 0,02 | 0,19 ± 0,02 |
| * selon l'invention | | | |

Dans les bétons à base de chaux standard (chaux STD6), tous les échantillons préparés n'ont pas pu être testés car certains se sont brisés lors de leur démoulage. Dans ces éprouvettes, des résistances à la compression très faibles ont été constatées.

Les compositions de liants à base de composants à haute surface spécifique (chaux HS5, composant A et composant B) permettent d'atteindre un niveau significatif de résistance mécanique. Par ailleurs, plus la surface spécifique de la composition de liant est grande, plus la résistance est élevée, et moins le développement de cette résistance est retardé.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système à base de matériaux végétaux ou bio-sourcés choisi parmi les enduits, les mortiers et les bétons de matériaux bio-sourcés comprenant un matériau végétal ou bio-sourcé choisi dans le groupe constitué du bois et du chanvre, et une composition de liant comprenant un premier composant minéral conventionnel et un deuxième composant, ledit système étant **caractérisé en ce que** ladite composition de liant présente une surface spécifique calculée selon la méthode BET supérieure à 10 m²/g, de préférence supérieure à 12 m²/g, en particulier supérieure à 14 m²/g et ledit deuxième composant présente une surface spécifique calculée selon la méthode BET supérieure à 22 m²/g, de préférence supérieure à 25 m²/g et est choisi dans le groupe constitué de la chaux éteinte pulvérulente, des argiles colloïdales, choisies dans le groupe constitué des kaolinites, de la bentonite, des wollastonites et de leurs mélanges et ledit premier composant minéral conventionnel est un composant liant choisi dans le groupe constitué des ciments, de la chaux éteinte ou aérienne standard, de la chaux hydraulique naturelle ou artificielle, des argiles, des liants à maçonner, des liants à prise pouzzolanique et hydraulique, du plâtre et de leurs mélanges et au moins un parmi ledit premier composant minéral conventionnel et ledit deuxième composant est à base de chaux éteinte pulvérulente.

2. Système à base de matériaux végétaux ou bio-sourcés selon la revendication 1 dans lequel ledit deuxième composant présente une surface spécifique calculée selon la méthode BET supérieure à 27 m²/g, de préférence supérieure à 30 m²/g, de manière préférentielle supérieure à 32 m²/g et en particulier supérieure à 35 m²/g.

3. Système à base de matériaux végétaux ou bio-sourcés selon la revendication 1 ou la revendication 2, dans lequel lesdits ciments sont choisis dans le groupe des ciments courants, en particulier normalisés, des ciments réfractaires, alumineux fondus, prompts, des ciments portland, des laitiers de hauts-fourneaux, des cendres volantes et de leurs mélanges.

4. Système à base de matériaux végétaux ou bio-sourcés selon l'une quelconque des revendications 1 à 3, dans lequel ledit deuxième composant est présent en une quantité supérieure à 5% en poids, avantageusement supérieure à 10% en poids, préférentiellement supérieure à 20 % en poids, en particulier égale ou supérieure à 25% en poids, de préférence égale ou supérieure à 30 % en poids, avantageusement égale ou supérieure à 40% en poids et égale ou inférieure à 80 % en poids, en particulier égale ou inférieure à 60 % en poids, par rapport au poids total de ladite composition de liant.

5. Système à base de matériaux végétaux ou bio-sourcés selon l'une quelconque des revendications 1 à 4, dans lequel ledit deuxième composant présente un volume poreux total calculé selon la méthode BJH de désorption d'azote supérieur ou égal à 0,07 cm³/g, de préférence supérieur ou égal à 0,08 cm³/g, de manière préférentielle supérieure ou égal à 0,1 cm³/g.

6. Système à base de matériaux végétaux ou bio-sourcés selon l'une quelconque des revendications 1 à 5, dans lequel ledit deuxième composant présente un volume poreux total calculé selon la méthode BJH de désorption d'azote supérieur ou égal à 0,12 cm³/g, de préférence supérieur ou égal à 0,15 cm³/g et de manière particulière supérieur à 0,18 cm³/g.

7. Système à base de matériaux végétaux ou bio-sourcés selon l'une quelconque des revendications 1 à 6, dans lequel ledit deuxième composant est à base de chaux éteinte pulvérulente.

8. Système à base de matériaux végétaux ou bio-sourcés selon l'une quelconque des revendications 1 à 7, dans lequel ledit deuxième composant est à base de chaux éteinte pulvérulente et présente une densité en vrac mesurée selon la norme EN 459-2 allant de 250 à 500 kg/m³.

9. Système à base de matériaux végétaux ou bio-sourcés selon l'une quelconque des revendications 1 à 8, comprenant en outre un entraîneur d'air tel qu'un surfactant ou tensioactif, en particulier choisi dans le groupe des sulfates ou sulfonates d'alkyle, des alcools gras éthoxylés, des copolymères à blocs et de leurs mélanges.

10. Système à base de matériaux végétaux ou bio-sourcés selon l'une quelconque des revendications 1 à 9, comprenant en outre un ou plusieurs agent de rétention d'eau, par exemple des éthers cellulosiques ou des gommes de guar, leurs dérivés et leurs mélanges.

11. Système à base de matériaux végétaux ou bio-sourcés selon l'une quelconque des revendications 1 à 10, comprenant en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou des mélamines formaldéhydes, des colloïdes minéraux, en particulier la silice et les argiles, et leurs mélanges.

12. Système à base de matériaux végétaux ou bio-sourcés selon l'une quelconque des revendications 1 à 11, comprenant en outre un agent hydrophobant choisi dans le groupe des sels d'acides gras comme les stéarates et les oléates, des huiles végétales et minérales, des silanes, des siloxanes et de leurs mélanges.

13. Système à base de matériaux végétaux ou bio-sourcés selon l'une quelconque des revendications 1 à 12, comprenant en outre un liant organique choisi dans le groupe des latex industriels comme par exemple des latex à base de copolymères d'acétate de polyvinyle/éthylène, d'acétate de polyvinyle/versatate, de styrol / butadiène.

14. Système à base de matériaux végétaux ou bio-sourcés selon l'une quelconque des revendications 1 à 13, **caractérisé en ce qu'**il est sous forme sèche, prêt à gâcher avec de l'eau.

15. Système à base de matériaux végétaux ou bio-sourcés selon l'une quelconque des revendications 1 à 13, comprenant en outre de l'eau et étant ainsi sous forme prêt à l'emploi.

16. Utilisation d'un système à base de matériaux végétaux ou bio-sourcés selon l'une quelconque des revendications 1 à 15, dans un enduit léger contenant des agrégats végétaux ou bio-sourcés comme le bois ou le chanvre.

17. Utilisation d'un système à base de matériaux végétaux ou bio-sourcés selon l'une quelconque des revendications 1 à 16, dans un mortier contenant des agrégats végétaux ou bio-sourcés comme le bois ou le chanvre.

18. Utilisation d'un système à base de matériaux végétaux ou bio-sourcés selon l'une quelconque des revendications 1 à 17, dans un béton contenant des agrégats végétaux ou bio-sourcés comme le bois ou le chanvre.

19. Utilisation selon les revendications 16 à 18, dans laquelle lesdits agrégats végétaux ou bio-sourcés ont une forme de pailles de longueur de 5 à 50 mm et de largeur inférieure à 10 mm.

## Patentansprüche

1. System aus Materialien pflanzlichen oder biologischen Ursprungs, ausgewählt aus den Beschichtungen, den Mörteln und den Betons aus Materialien biologischen Ursprungs, umfassend ein Material pflanzlichen oder biologischen Ursprungs, ausgewählt aus der Gruppe bestehend aus Holz und Hanf, und eine Bindemittelzusammensetzung, umfassend eine erste konventionelle Mineralkomponente und eine zweite Komponente, wobei das System **dadurch gekennzeichnet ist, dass** die Bindemittelzusammensetzung eine spezifische Oberfläche aufweist, die nach dem BET-Verfahren berechnet wird, die größer als 10 m²/g ist, vorzugsweise größer als 12 m²/g ist, insbesondere größer als 14 m²/g ist, und die zweite Komponente eine spezifische Oberfläche aufweist, die nach dem BET-Verfahren berechnet wird, die größer als 22 m²/g ist, vorzugsweise größer als 25 m²/g ist, und ausgewählt ist aus der Gruppe bestehend aus pulverartigem Löschkalk, den kolloidalen Tonen, ausgewählt aus der Gruppe bestehend aus den Kaoliniten, Bentonit, den Wollastoniten und aus Gemischen davon und die erste konventionelle Mineralkomponente eine Bindemittelkomponente ist, ausgewählt aus der Gruppe bestehend aus den Zementen, Standardlösch- oder -luftkalk, natürlichem oder künstlichem hydraulischem Kalk, den Tonen, den zu vermauernden Bindemitteln, den puzzolanisch und hydraulisch abbindenden Bindemitteln, Gips und Gemischen davon und mindestens eines von der ersten konventionellen Mineralkomponente und der zweiten Komponente aus pulverartigem Löschkalk ist.

2. System aus Materialien pflanzlichen oder biologischen Ursprungs nach Anspruch 1, wobei die zweite Komponente eine spezifische Oberfläche aufweist, die nach dem BET-Verfahren berechnet ist, die größer als 27 m²/g ist, vorzugsweise größer als 30 m²/g ist, bevorzugt größer als 32 m²/g ist und insbesondere größer als 35 m²/g ist.

3. System aus Materialien pflanzlichen oder biologischen Ursprungs nach Anspruch 1 oder Anspruch 2, wobei die Zemente ausgewählt sind aus der Gruppe der Normal-, insbesondere Normzemente, der Feuerfest-, Tonerdeschmelz-, Romanzemente, der Portlandzemente, der Hochofenschlacken, der Flugaschen und Gemischen davon.

4. System aus Materialien pflanzlichen oder biologischen Ursprungs nach einem der Ansprüche 1 bis 3, wobei die zweite Komponente in einer Menge vorhanden ist, die größer als 5 Gew.-% ist, vorteilhafterweise größer als 10 Gew.-% ist, bevorzugt größer als 20 Gew.-% ist, insbesondere gleich oder größer als 25 Gew.-% ist, vorzugsweise gleich oder größer als 30 Gew.-% ist, vorteilhafterweise gleich oder größer als 40 Gew.-% ist und gleich oder kleiner als 80 Gew.-% ist, insbesondere gleich oder kleiner als 60 Gew.-% ist, in Bezug auf das Gesamtgewicht der Bindemittelzusammensetzung.

5. System aus Materialien pflanzlichen oder biologischen Ursprungs nach einem der Ansprüche 1 bis 4, wobei die zweite Komponente ein Gesamtporenvolumen aufweist, das nach dem BJH-Verfahren der Stickstoffdesorption berechnet wird, das größer als oder gleich 0,07 cm³/g ist, vorzugsweise größer als oder gleich 0,08 cm³/g ist, bevorzugt größer als oder gleich 0,1 cm³/g ist.

6. System aus Materialien pflanzlichen oder biologischen Ursprungs nach einem der Ansprüche 1 bis 5, wobei die zweite Komponente ein Gesamtporenvolumen aufweist, das nach dem BJH-Verfahren der Stickstoffdesorption berechnet wird, das größer als oder gleich 0,12 cm³/g ist, vorzugsweise größer als oder gleich 0,15 cm³/g ist, und besondererweise größer als 0,18 cm³/g ist.

7. System aus Materialien pflanzlichen oder biologischen Ursprungs nach einem der Ansprüche 1 bis 6, wobei die zweite Komponente aus pulverartigem Löschkalk ist.

8. System aus Materialien pflanzlichen oder biologischen Ursprungs nach einem der Ansprüche 1 bis 7, wobei die zweite Komponente aus pulverartigem Löschkalk ist und eine Schüttdichte aufweist, die nach der Norm EN 459-2 gemessen wird, die von 250 bis 500 kg/m³ reicht.

9. System aus Materialien pflanzlichen oder biologischen Ursprungs nach einem der Ansprüche 1 bis 8, weiter umfassend einen Luftporenbildner, wie ein oberflächenaktives Mittel oder Tensid, insbesondere ausgewählt aus der Gruppe der Sulfate oder Alkylsulfonate, der ethoxilierten Fettalkohole, der Blockcopolymere und Gemischen davon.

10. System aus Materialien pflanzlichen oder biologischen Ursprungs nach einem der Ansprüche 1 bis 9, weiter umfassend ein oder mehrere Wasserrückhaltemittel, zum Beispiel Celluloseether oder Guargummis, Derivate davon und Gemische davon.

11. System aus Materialien pflanzlichen oder biologischen Ursprungs nach einem der Ansprüche 1 bis 10, weiter umfassend einen Rheologiemodifizierer, insbesondere ausgewählt aus der Gruppe der Hydrokolloide, genauer gesagt aus der Gruppe der Polysaccharide, der Stärkederivate, der Alginate, der Guargummis und Derivate davon, der Xanthangummis und Derivate davon, der Caragenangummis und Derivate davon, der Succinoglycane, der Betonverflüssiger wie Polycarboxylate oder Melaminformaldehyde, der Mineralkolloide, insbesondere Siliziumoxid und die Tone und Gemischen davon.

12. System aus Materialien pflanzlichen oder biologischen Ursprungs nach einem der Ansprüche 1 bis 11, weiter umfassend ein hydrophobierendes Mittel, ausgewählt aus der Gruppe der Fettsäuresalze wie die Stearate und die Oleate, der Pflanzen- und Mineralöle, der Silane, der Siloxane und Gemische davon.

13. System aus Materialien pflanzlichen oder biologischen Ursprungs nach einem der Ansprüche 1 bis 12, weiter umfassend ein organisches Bindemittel, ausgewählt aus der Gruppe der industriellen Latizes, wie zum Beispiel die Latizes aus Polyvinyl/Ethylenacetat-, Polyvinyl/Versatatacetat-, Styrol/Butadien-Copolymeren.

14. System aus Materialien pflanzlichen oder biologischen Ursprungs nach einem der Ansprüche 1 bis 13, **dadurch gekennzeichnet, dass** es in trockener Form ist, bereit, um mit Wasser angerührt zu werden.

15. System aus Materialien pflanzlichen oder biologischen Ursprungs nach einem der Ansprüche 1 bis 13, das weiter Wasser umfasst und somit in betriebsbereiter Form ist.

16. Verwendung eines Systems aus Materialien pflanzlichen oder biologischen Ursprungs nach einem der Ansprüche 1 bis 15, in einem Leichtputz, die Aggregate pflanzlichen oder biologischen Ursprungs wie Holz oder Hanf enthält.

17. Verwendung eines Systems aus Materialien pflanzlichen oder biologischen Ursprungs nach einem der Ansprüche 1 bis 16, in einem Mörtel, der Aggregate pflanzlichen oder biologischen Ursprungs wie Holz oder Hanf enthält.

18. Verwendung eines Systems aus Materialien pflanzlichen oder biologischen Ursprungs nach einem der Ansprüche 1 bis 17, in einem Beton, der Aggregate pflanzlichen oder biologischen Ursprungs wie Holz oder Hanf enthält.

19. Verwendung nach Ansprüchen 16 bis 18, wobei die Aggregate pflanzlichen oder biologischen Ursprungs eine Form von Stroh haben, die eine Länge von 5 bis 50 mm und eine Breite, die kleiner als 10 mm ist, haben.

## Claims

1. A system based on plant or bio-sourced materials selected from coatings, mortars and concretes of bio-sourced materials comprising a plant or bio-sourced material selected from the group consisting of wood and hemp, and a binder composition comprising a first conventional mineral component and a second component, said system being **characterized in that** said binder composition has a specific surface area, calculated according to the BET method, greater than 10 m²/g, preferably greater than 12 m²/g, in particular greater than 14 m²/g and said second component has a specific surface area, calculated according to the BET method, greater than 22 m²/g, preferably greater than 25 m²/g and is selected from the group consisting of powdered slaked lime, colloidal clays, selected from the group consisting of kaolinites, bentonite, wollastonites and of their mixtures thereof and said first conventional mineral component is a binder component selected from the group consisting of cements, standard slaked or air lime, natural or artificial hydraulic lime, clays, binders for masonry, binders with pozzolanic and hydraulic setting, gypsum and mixtures thereof and at least one of said first conventional mineral component and said second component is based on powdered slaked lime.

2. The system based on plant or bio-sourced materials according to claim 1, wherein said second component has a specific surface, calculated according to the BET method, greater than 27 m²/g, preferably greater than 30 m²/g, preferentially greater than 32 m²/g and in particular greater than 35 m²/g.

3. The system based on plant or bio-sourced materials according to claim 1 or claim 2, wherein said cements are selected from the group of common cements, in particular standardized, refractory, molten aluminous, prompt cements, Portland cements, slags from blast furnace, fly ash and mixtures thereof.

4. The system based on plant or bio-sourced materials according to any of claims 1 to 3, wherein said second component is present in an amount of more than 5% by weight, advantageously more than 10% by weight, preferentially more than 20% by weight, in particular equal to or more than 25% by weight, preferably equal to or more than 30% by weight, advantageously equal to or more than 40% by weight and equal to or less than 80% by weight, in particular equal to or less than 60% by weight, based on the total weight of said binder composition.

5. The system based on plant or bio-sourced materials according to any of claims 1 to 4, wherein said second component has a total pore volume calculated according to the BJH method of nitrogen desorption greater than or equal to 0.07 cm³/g, preferably greater than or equal to 0.08 cm³/g, preferably greater than or equal to 0.1cm³/g.

6. The system based on plant or bio-sourced materials according to any of claims 1 to 5, wherein said second component has a total pore volume calculated according to the BJH method of nitrogen desorption greater than or equal to 0.12 cm³/g, preferably greater than or equal to 0.15 cm³/g and in particularly greater than 0.18 cm³/g.

7. The system based on plant or bio-sourced materials according to any of claims 1 to 6, wherein said second component is based on powdered slaked lime.

8. The system based on plant or bio-sourced materials according to any of claims 1 to 7, wherein said second component is based on powdered slaked lime and has a bulk density measured according to EN 459-2 standard ranging from 250 to 500 kg/m³.

9. The system based on plant or bio-sourced materials according to any of claims 1 to 8, further comprising an air entraining such as a surfactant or tenside, in particular selected from the group of alkyl sulfates or sulfonates, ethoxylated fatty alcohols, block copolymers and mixtures thereof.

10. The system based on plant or bio-sourced materials according to any of claims 1 to 9, further comprising one or more water retention agents, for example cellulose ethers or guar gums, derivatives thereof and mixtures thereof.

11. The system based on plant or bio-sourced materials according to any of claims 1 to 10, further comprising a rheology modifier, in particular selected from the group of hydrocolloids, more particularly from the group of polysaccharides, starch derivatives, alginates, guar gums and derivatives thereof, xanthan gums and derivatives thereof, caraghenan gums and derivatives thereof, succinoglycans, superplasticizers like polycarboxylates or melamine formaldehyde, mineral colloids, in particular silica and clays, and mixtures thereof.

12. The system based on plant or bio-sourced materials according to any of claims 1 to 11, further comprising a hydrophobicizing agent selected from the group of salt of fatty acids like stearates and oleates, plant and mineral oil, silanes, siloxanes and mixtures thereof.

13. The system based on plant or bio-sourced materials according to any of claims 1 to 12, further comprising an organic binder selected from the group of industrial latices such as for example latices based on polyvinyl acetate/ethylene, polyvinyl acetate/versatate, styrene/butadiene copolymers.

14. The system based on plant or bio-sourced materials according to any of claims 1 to 13, **characterized in that** it is in dry form, ready to be mixed with water.

15. The system based on plant or bio-sourced materials according to any of claims 1 to 13, further comprising water and thus being in a ready-to-use form.

16. Use of a system based on plant or bio-sourced materials according to any of claims 1 to 15, in a lightweight coating containing plant or bio-sourced aggregates like wood or hemp.

17. Use of a system based on plant or bio-sourced materials according to any of claims 1 to 16, in a mortar containing plant or bio-sourced aggregates like wood or hemp.

18. Use of a system based on plant or bio-sourced materials according to any of claims 1 to 17, in a concrete containing plant or bio-sourced aggregates like wood or hemp.

19. The use according to claims 16 to 18, wherein said plant or bio-sourced aggregates have a straw form with a length of 5 to 50 mm and a width of less than 10 mm.
